# EUROPEAN PATENT SPECIFICATION

(11) **EP 3 442 765 B1**
(45) Date of publication and mention of the grant of the patent: **26.01.2022**
(21) Application number: 17716209.6
(22) Date of filing: 07.04.2017
(51) Int. Cl.: B29B 15/02, B29K 7/00

(54) **DOSAGE CONTROL IN THE MANUFACTURE OF TIRES**
DOSIERUNGSSTEUERUNG IN DER HERSTELLUNG VON REIFEN
COMMANDE DE DOSAGE DANS LA FABRICATION DE PNEUS

(30) Priority: 11.04.2016 FR 1653157
(43) Date of publication of application: 20.02.2019
(73) Proprietor: Compagnie Générale des Etablissements Michelin, 63000 Clermont-Ferrand (FR)
(72) Inventor: LAFOND, Sébastien, 63040 Clermont-Ferrand Cedex 9 (FR); TOURNEBIZE, Aurélien, 63040 Clermont-Ferrand Cedex 9 (FR)
(74) Representative: Roussy, Delphine
(86) International application number: PCT/EP2017/058328
(87) International publication number: WO 2017/178348

(56) References cited:
- GB-A- 2 028 518

## Description

### TECHNICAL FIELD

The disclosed invention relates generally to the production of rubber mixtures and vehicle tires made therefrom. More particularly, the disclosed invention relates to efficiency attained in the production of rubber mixtures by cutting and weighing the rubber before it is fed to a mixer.

### BACKGROUND

In the fabrication of tires, a rubber mixture can be chosen from among a variety of rubber mixtures, each having different ingredients that are mixed in different quantities and derived from a variety of rubber mixture recipes. These recipes require the mixture of batches of non-vulcanized rubber (natural or synthetic) in predetermined mass proportions (also referred to as "dosage"). Each batch includes one or several types of rubber that, after mixing, confer desired properties to the tire. Each rubber type is typically furnished in the form of bales of rubber of predetermined weight and volume. Each rubber bale must be weighed in order to respect the weights determined by the recipe. In order to carry out this weighing, the bales are transported toward a guillotine having at least one blade. The guillotine cuts the bales into pieces that will serve to feed a mixer as a rubber batch.

For the same kind and grade of elastomer, the properties of this elastomer may vary from one supplier to another and even from one lot to another for the same supplier. In order to obtain the most homogeneous properties possible, the disclosure explains how to constitute a batch using, for the same kind and the same grade of elastomer, different batches that can come from different suppliers. Another advantage is that the tire manufacturer does not depend on a single source of rubber (i.e., either a single supplier or a single supply from a main supplier) to achieve its production objectives.

Because each batch is introduced into a rubber mixer in predetermined proportions, precise metering solutions are required, while maintaining the integrity of the various properties of the rubber.

Patent document GB 2 028 518 A discloses a device for the automatic preparation of a rubber mix from a plurality of different components comprises a member of conveyor lines each comprising a feed, a measuring, and a weighing conveyor. Blocks of different components are fed along the lines to a collector conveyor which runs transverse to the conveyor lines downstream of and below them. At an intermediate level between the conveyor lines and the collector conveyor is a storage unit. A hand saw is located between the measuring and weighing conveyor. A processor is provided including means for determining the amounts, of different components in a mix and for controlling the hand saw.

### SUMMARY

The invention provides a method for creating batches of unvulcanized rubber before their mixture in a rubber mixer. There is a selection of at least one batch for mixing in the rubber mixer, in which each batch corresponds to a selection of the rubber bales that each correspond to a nature of rubber composition having predetermined characteristics. The invention includes a supply station where uncured rubber bales are supplied from the corresponding rubber natures and in a predetermined proportion corresponding to a batch selected at the supply station. A cutting station is provided that includes at least one blade for cutting at least one bale into pieces. A weighing station is provided for weighing the bales and the pieces. A storage station is provided for holding the pieces between successive batch creation cycles. The bales are weighed at the weighing station to obtain the weight of the bales. The weight of the bales is compared with the required weight of the batch. The bales and the pieces are transported between the supply station, the cutting station, the weighing station, the storage station and the rubber mixer via a feed belt and in a sequence determined by the equivalence between the required weight of the batch and (a) the weight of the bales or (b) a sum of the weight of the bales and a weight of the pieces.

According to an embodiment of the invention, the batches are created by mixing different types and grades of elastomers. According to a specific embodiment of the invention, each batch includes rubber types and grades from different suppliers, rubbers of different types from the same supplier, or a combination of the two.

According to an embodiment of the invention, when the weight of the bales equals the required weight of the batch, the bales are transported as a batch to the rubber mixer. When the weight of the bales is greater than the required weight of the batch, a portion of at least one bale is removed, with the removed portion having a weight equal to the difference between the required weight of the batch and the weight of the bales. When the weight of the bales is less than the required weight of the batch, at least one additional bale is cut into one or more pieces in a proportion corresponding to the predetermined proportion.

According to an embodiment of the invention, at least one piece is transported to the weighing station and the transported pieces are weighed to obtain the sum of the weight of the bales and the weight of the pieces. The non-transported pieces are stored at the storage station until the next batch creation cycle.

According to an embodiment of the invention, when the sum exceeds the required weight of the batch, an excess part of at least one transported piece is removed, the removed part having a weight equal to the difference between the required weight of the batch and the sum. When the sum is less than the required weight of the batch, at least one additional bale is cut into one or more additional pieces in a proportion corresponding to the predetermined proportion, with the at least one additional piece having a weight equal to or greater than the difference between the required weight of the batch and the sum. When the sum is equal to the required weight of the batch, the pieces and the additional pieces are transported to the rubber mixer.

According to an embodiment of the invention, cutting and weighing are performed iteratively until the sum is equal to the required weight of the batch in a proportion corresponding to the predetermined proportion. The stored pieces are transported to the weighing station. These pieces are weighed for the next batch creation cycle, in the course of which a cumulative weight of the stored pieces is compared to the required weight of the next batch.

According to an embodiment of the invention, a transport system is provided that effects transport between the supply station, the cutting station, the storage station, the weighing station and the rubber mixer.

According to an embodiment of the invention, at least one element is provided among a scale to obtain the weight of the bales prior to cutting the bales and a scale to obtain the weight of the pieces after cutting and before conveying the pieces to the weighing station.

An embodiment of the invention includes programming sequences for the transport system such that the predetermined sequence can be selected among several sequences.

An embodiment of the invention includes mixing the batch in the rubber mixer.

The invention also provides a system for performing the disclosed methods and an assembly for fabricating tires including the disclosed system.

Other aspects of the presently disclosed invention will become readily apparent from the following detailed description.

### BRIEF DESCRIPTION OF THE DRAWINGS

The nature and the various advantages of the invention will become clearer upon reading the following detailed description, taken in conjunction with the accompanying drawings, in which like references refer to comparable elements, and in which:
FIG. 1 is a schematic view of an embodiment of a system for cutting rubber according to the invention.
FIGS. 2 to 15 show the system of FIG. 1 in the course of a dosing sequence during a batch creation cycle.
FIG. 16 is a schematic view of another embodiment of a system for cutting rubber according to the invention.
FIGS. 17 to 19 show the system of FIG. 16 in the course of a dosing sequence during a batch creation cycle.

### DETAILED DESCRIPTION

Reference will now be made in detail to embodiments of the invention, one or more examples of which are illustrated in the drawings. Each example is provided by way of explanation and not limitation of the described invention. It will be understood by those skilled in the art that various modifications and variants may be applied in the present invention without departing from the scope or spirit of the invention.

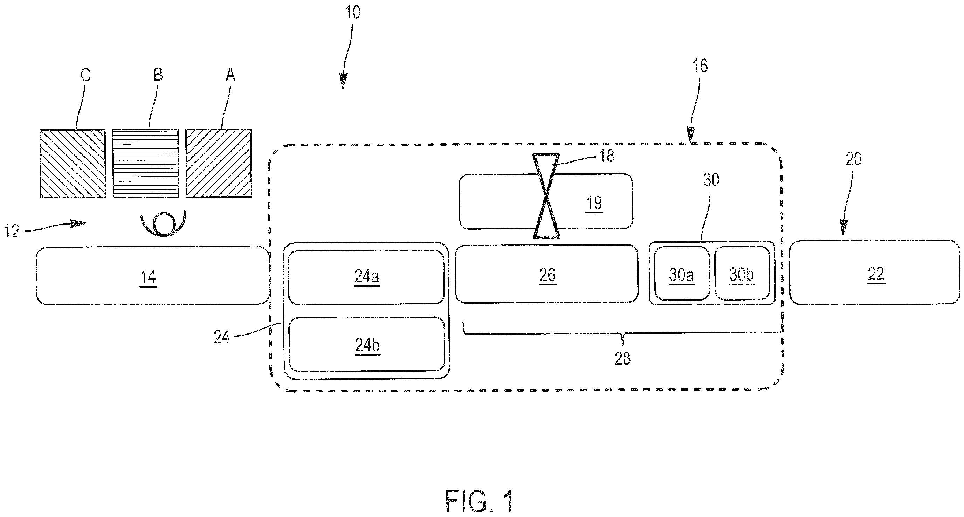

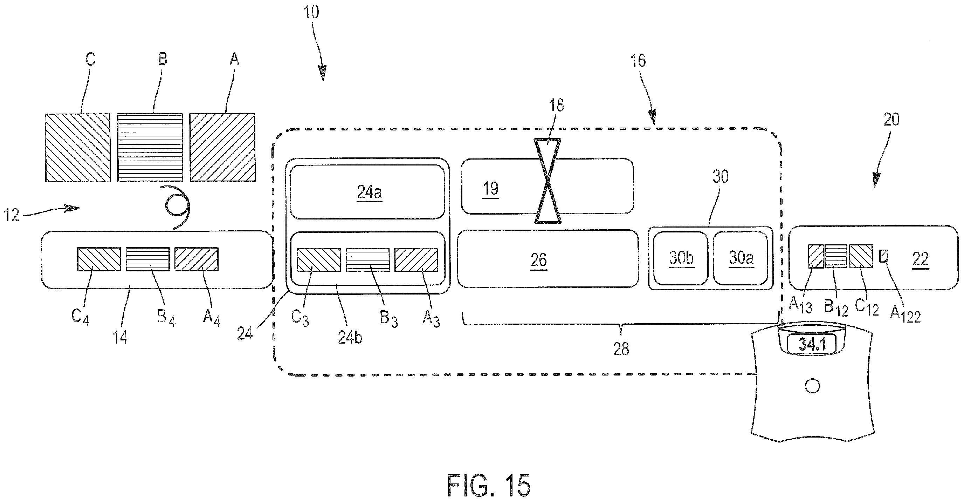

Referring now to the figures on which the same numbers identify identical elements, FIGS. 1 to 15 show an example of a system 10 for creating batches of rubber to be mixed. Each batch corresponds to a selection of one or more rubber bales that can be classified by type (e.g., BR, SBR, IR ...) and by grades. Different types and different grades have different properties, but it is also possible that, for the same kind and grade, the properties differ according to the batch of the same supplier.

It is contemplated that system 10 allows the production of a rubber mixture having various and varied properties as determined by the performance requirements of the resulting tire. As used herein, the term "tires" includes, but is not limited to, tires used for light vehicles, passenger cars, commercial vehicles (including heavy vehicles), recreational vehicles(including, without limitation, bicycles, motorcycles, ATVs, etc.), agricultural vehicles, military vehicles, industrial vehicles, mining vehicles and construction equipment. It is also contemplated that the products made by the present invention include complete and partial tire treads such as those used in known retreading processes.

Referring to FIG. 1, the system 10 creates the selected rubber batches before delivery of the batches to a mixer having a chamber of a predetermined filling volume for receiving and mixing the batches. The mixer (not shown) is selected from known varieties.

The batches are created by mixing different types and grades of elastomers. Each type and grade designates an elastomer whose properties are known. However, a type and grade may include lots that have different properties (e.g., different dates of manufacture, different delivery dates from the supplier, etc.). In order to guarantee a homogeneous product, each batch includes rubbers of different types and grades from different suppliers or different lots from the same supplier. In the remainder of the description, the various kinds, grades, species, lots and batches of elastomers of the same supplier or of a different supplier will be designated by the term "nature" of elastomer.

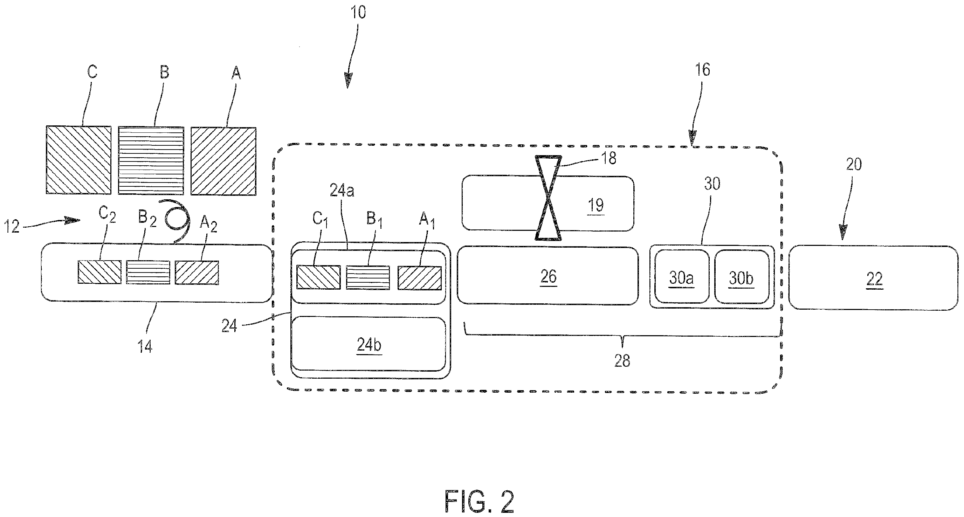

As can be seen in FIGS. 1 and 2, system 10 includes a supply station 12 where rubber bales A_{I}, B_{I}, C_{I} (where "I" varies from 1 to N) are selected from among natures A, B, C and are placed on a feed belt 14. Supply station 12 may include a location for receiving and storing the bales before creating a batch. As shown and described, three bales are chosen from the three different natures to create a batch during a batch creation cycle. It is understood, however, that any number of bales may be selected in a batch creation cycle. It is also accepted (according to the foregoing description), and according to the requirements of the current recipe, that for the N bales chosen, different types and grades may be used but also bales of the same type and the same grade but from a different supplier or lot.

Referring again to FIG. 1, a cutting station 16 is provided that includes at least one cutting blade 18 for cutting at least one bale into pieces of predetermined weight. Blade 18 may include one or more blades that are disposed on a known machine for cutting the bale-shaped rubber. These machines are suitable for managing all natural rubber and synthetic rubber, including those that are pre-packaged at specific weights (e.g., 33.3 kg bale). At least one conveyor belt 19 carries the bales and pieces to feed blade 18 and to convey the pieces for the creation of the batch.

System 10 also has a weighing station 20 including at least one scale for weighing the bales A_{I}, B_{I}, C_{I} and the pieces removed therefrom. In the process, weighing is done before delivery of the batch to a rubber mixer. In order to feed weighing station 20, a conveyor belt 22 is provided having at least one scale as is known in the art. Although only one conveyor belt 22 is shown, several conveyor belts may be used in accordance with the number and types of batch being created.

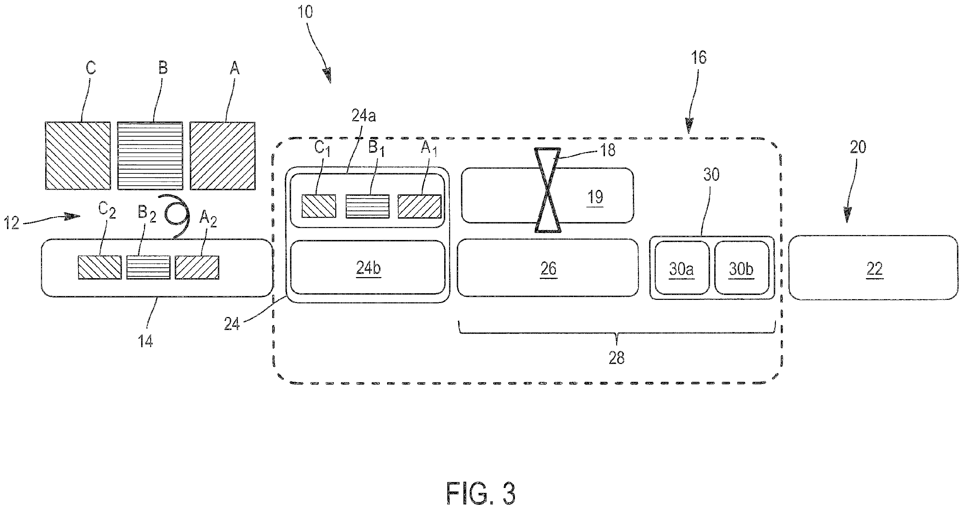

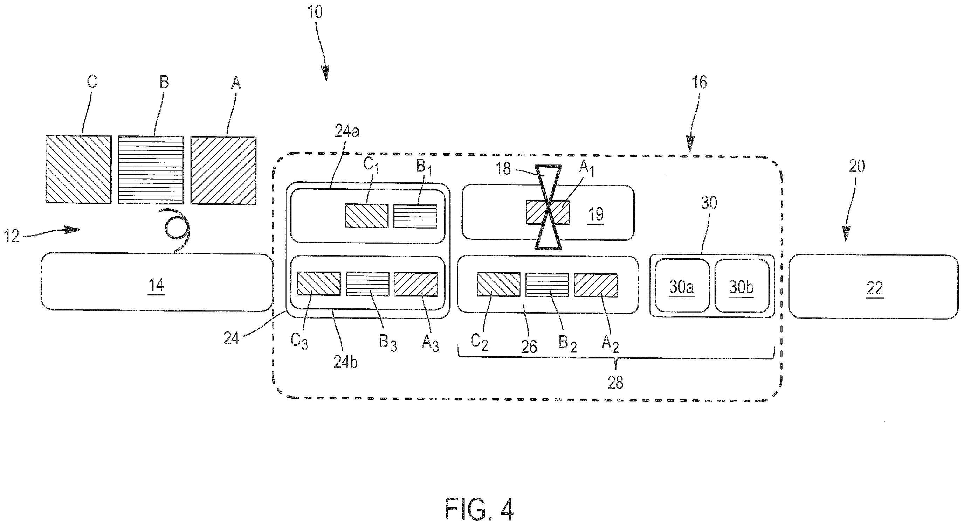

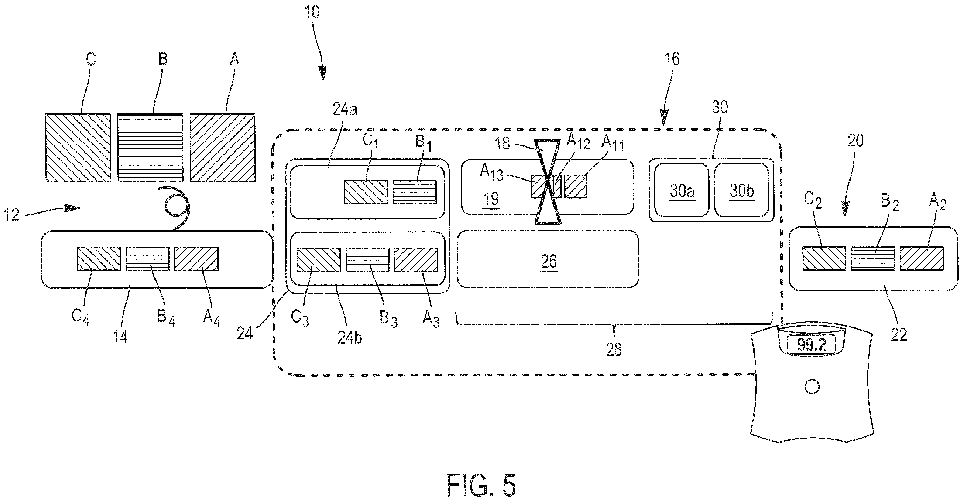

A distribution shuttle 24 is arranged between supply station 12 and cutting station 16 to transport the bales A_{I}, B_{I}, C_{I}. Distribution shuttle 24 includes at least two delivery belts 24a, 24b that make it possible to transfer bales A_{I}, B_{I}, C_{I} from feed belt 14 to blade 18 or to weighing station 20. Distribution shuttle 24 alternates between a position in which delivery belt 24a receives the bales from feed belt 14 (see FIG. 2) and a position in which delivery belt 24a conveys the bales to blade 18 (see FIG. 3). In this latter position, delivery belt 24b receives additional bales A', B', C' for direct transfer to weighing station 20 by a transfer belt 26, thereby bypassing blade 18 (see FIGS. 4 and 5). The transport sequence is determined by the equivalence between the required weight of the batch and (a) the detected weight of the bales or (b) a sum of the detected weight of the bales and a detected weight of the pieces.

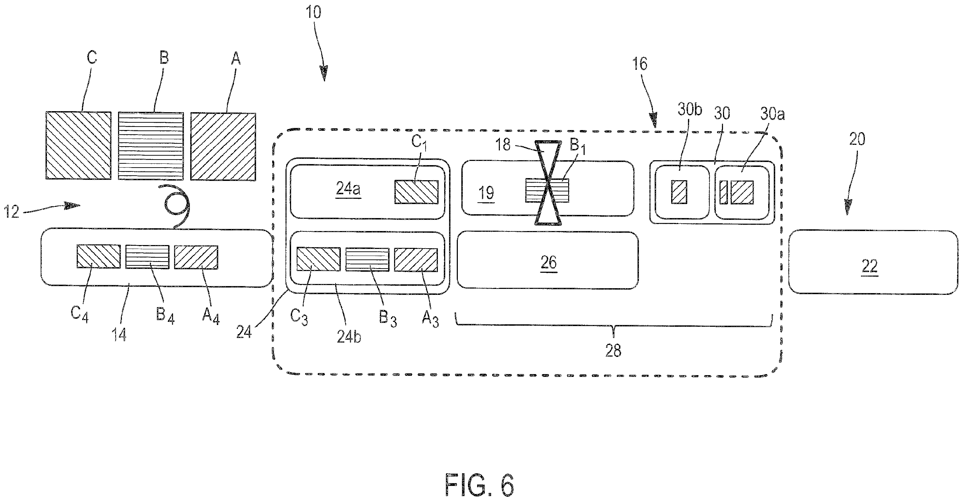

System 10 also includes a storage station 28 that includes transfer belt 26 and a transport shuttle 30 between the transfer belt and weighing station 20. Transport shuttle 30 includes at least two belts 30a, 30b that transport the pieces of bales A_{I}, B_{I}, C_{I} (which are cut by blade 18) selectively between the cutting station and at least one of storage station 28 and weighing station 20. In one position, transport shuttle 30 is disposed in the vicinity of transfer belt 26 so that belts 30a, 30b receive bales A₂, B₂, C₂ (see FIG. 4) and convey these bales directly to weighing station 20 (see FIG. 5). In another position, transport shuttle 30 is disposed close to conveyor belt 19 so that at least one belt 30a or 30b receives the pieces that are cut from bales A_{I}, B_{I}, C_{I} by blade 18 (See Figure 6).

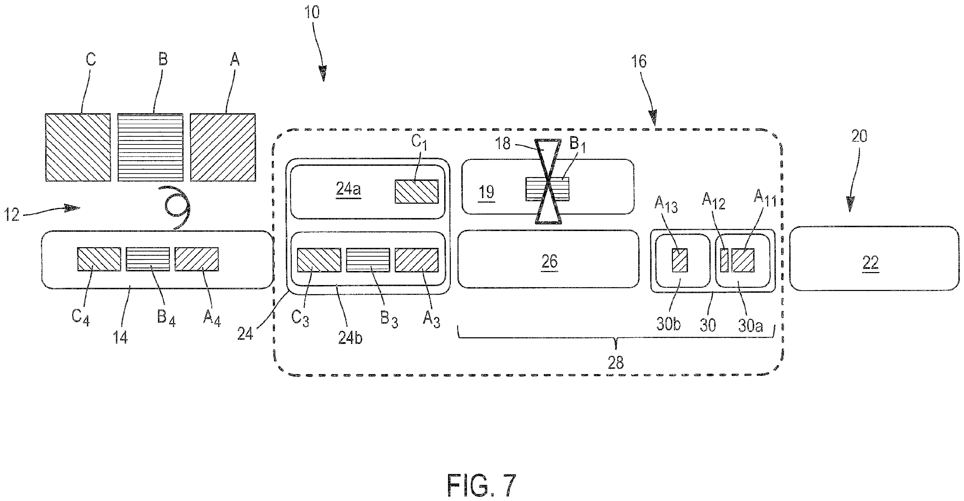

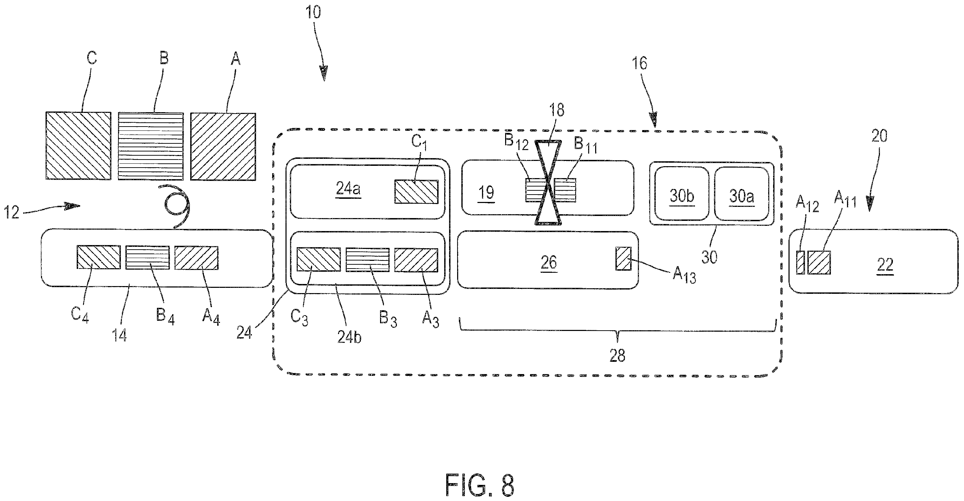

In a further position, transport shuttle 30 is arranged such that belt 30a delivers certain pieces to conveyor belt 22 and belt 30b delivers the remainder of the pieces to transfer belt 26 (see FIGS. 7 and 8). Transfer belt 26 stores the pieces until commencement of the next batch creation cycle. The transport and storage sequence is determined by the equivalence between the required weight of the batch and a sum of the detected weight of the bales and the detected weight of the pieces. It is understood that any number of pieces A_{IJ}, B_{IJ,} C_{IJ} (where "J" varies from 1 to N) can be cut to create a batch with the required weight.

Reference is now made to the figures to describe a dosage process that is performed by system 10. As used herein, a "batch" refers to an amount required for a batch creation cycle and may include one or several types of rubber for mixing. For a selected mixture, several types of elastomers are supplied according to the recipe. Doses are usually delivered in kilograms at a specified frequency (e.g., about 3 minutes). In this example, three natures are used in a batch, and for the same type and grade, the distribution may be between 20% and 45% of the required weight of that type and grade. In a given cycle time, the weight of the different natures is checked, as is the weight of the batch according to the specifications of the recipe. In some embodiments, the cycle time is less than or equal to 250 cm. All figures are provided by way of example only and do not limit the invention to particular values.

In FIG. 1, a dosing process begins. A batch is selected that requires the mixing of three different types of rubber. For example, the selected batch has a required weight of 150 kg, however, it is understood that the required weight can be any weight.

At the supply station 12, three bales A_{I}, B_{I}, C_{I} are chosen from the corresponding rubber natures A, B, C. Each bale A_{I}, B_{I}, C_{I} has a predetermined weight close to 33 kg. The use of bales whose weight is approximately known avoids the time to weigh the individual bales. Thus, while the final batch must include, for example, three natures in a batch, for the same type and the same grade, the distribution may be between 20% and 45% of the required weight of that grade and type.

Bales A_{I}, B_{I}, C_{I} are supplied to feed belt 14 by an operator (as shown) or automatically. The bales can be supplied in any order (ABC, ACB, BAC, BCA, CAB, CBA) in correspondence with the selected batch. A system can be set up to ensure the reproducibility of the location and position of each bale. The accuracy of the cutting and weighing during each batch creation cycle is thus respected. It is desirable to cut a larger piece of bale than expected. In this way, the excess weight of the batch can be stored at storage station 28 before delivery to the rubber mixer. This surplus will be used for the next batch.

Referring further to FIGS. 2 to 5, feed belt 14 conveys bales A_{I}, B_{I}, C_{I} to delivery belt 24a. Feed belt 14 is loaded with a second set of bales A₂, B₂, C₂, and distribution shuttle 24 aligns delivery belt 24a with conveyor belt 19. Delivery belt 24b readily receives bales A₂, B₂. C₂ and transfers them directly to transfer belt 26. Transport shuttle 30 is positioned downstream of transfer belt 26. Transport shuttle 30 transports bales A₂, B₂, C₂ to weighing station 20 and conveying belt 22. Delivery belt 24b simultaneously receives a third set of bales A₃, B₃, C₃ as feed belt 14 is loaded with a fourth set of bales A₄, B₄, C₄ (up until a set of bales A_{I}, B_{I}, C_{I}).

Referring again to FIG. 5 and further referring to FIGS. 6 to 8, weighing station 20 detects the cumulative weight of bales A₂, B₂. C₂ and compares a detected weight of the bales with the required weight of the batch (i.e., 150 kg). Since the cumulative weight of the bales is about 99.2 kg, which is less than the required weight of the batch, the difference (about 50.8 kg) must be obtained in the same proportion. After weighing, conveyor belt 22 carries bales A₂, B₂, C₂ to an area where the bales are stored until the desired batch weight is obtained. A control belt (not shown) can be disposed downstream of weighing station 20. The control belt not only verifies the weight of the batches (these include bales and pieces of bales) before delivery to the rubber mixer, but also allows storage of pieces until a full batch is created.

To obtain the difference, delivery belt 24a transfers bale A₁ to conveyor belt 19 in order to feed the bale to cutting blade 18 and to transport the pieces to weighing station 20. Bale A₁ advances under blade 18 which cuts the bale successively into one or more pieces A_{IJ}, A₁₂, A₁₃. Conveyor belt 19 conveys pieces A₁₁, A₁₂, A₁₃ to transport shuttle 30 and distributes the pieces between delivery belts 30a, 30b. The number of pieces on each delivery belt depends on the cumulative weight of pieces A₁₁, A₁₂, A₁₃ and the weight difference between the detected weight of bales A₂, B₂, C₂ and the required weight of the batch.

Delivery belt 30a carries pieces A₁₁, A₁₂, A₁₃ to weighing station 20 at the same time that delivery belt 30b carries piece A₁₃ to transfer belt 26. Transfer belt 26 stores piece A₁₃ until the arrival of pieces B₁, C₁ that follow.

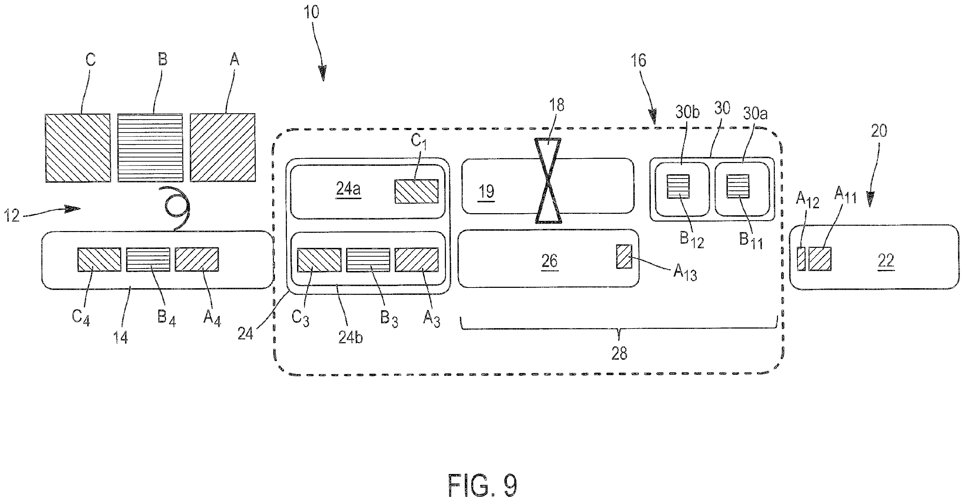

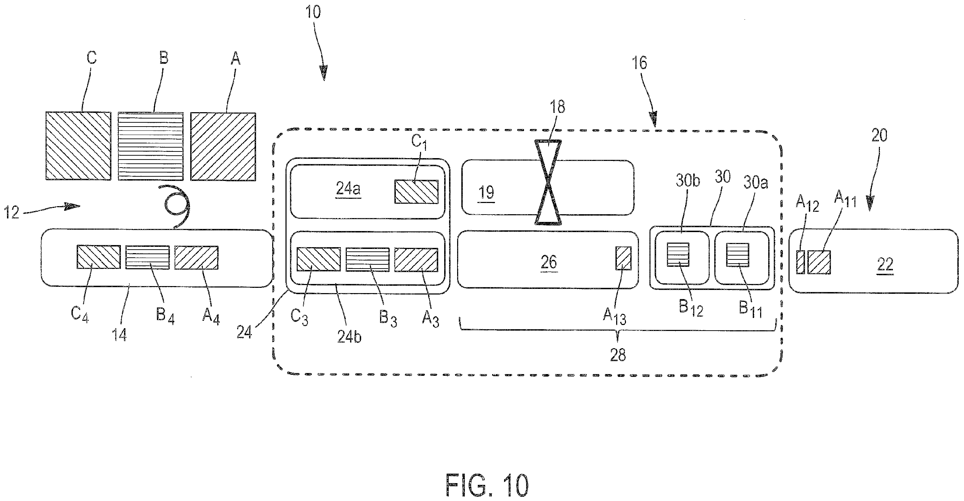

Referring again to FIG. 8 and further referring to FIGS. 9 and 10, transport shuttle 30 aligns delivery belt 30b with conveyor belt 19 while blade 18 cuts bale B₁ into pieces B₁₁, B₁₂. Belt 30b receives pieces B₁₁, B₁₂ and conveys piece B₁₁ to belt 30a. Transport shuttle 30 aligns delivery belt 30a with conveyor belt 22 to deliver piece B₁₁ to weighing station 20. Transport shuttle 30 simultaneously aligns delivery belt 30b with transfer belt 26 to deliver piece B₁₂ . Transfer belt 26 stores piece B₁₂ until the subsequent arrival of the pieces of the bale C₁.

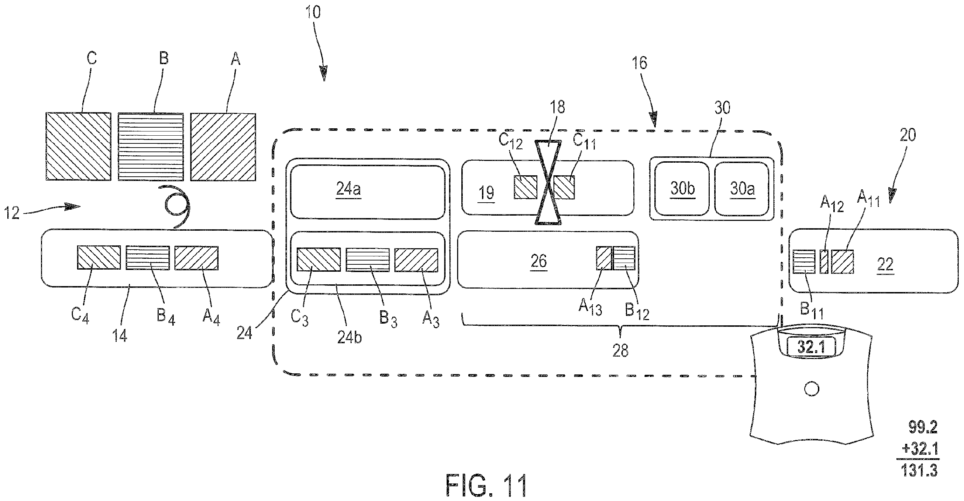

Referring further to FIG. 11, weighing station 20 detects the cumulative weight of pieces A₁₁, A₁₂ and B₁₁ at about 32.1 kg. Weighing station 20 may include a comparator that receives the sum of the detected weight of bales A₁, B₁, C₁ and a detected weight of pieces A₁₁, A₁₂ and B₁₁. This sum (131.3 kg) is then compared with the required weight of the batch (i.e., 150 kg). If the required weight of the batch exceeds this sum, the difference is obtained with the bale C₁.

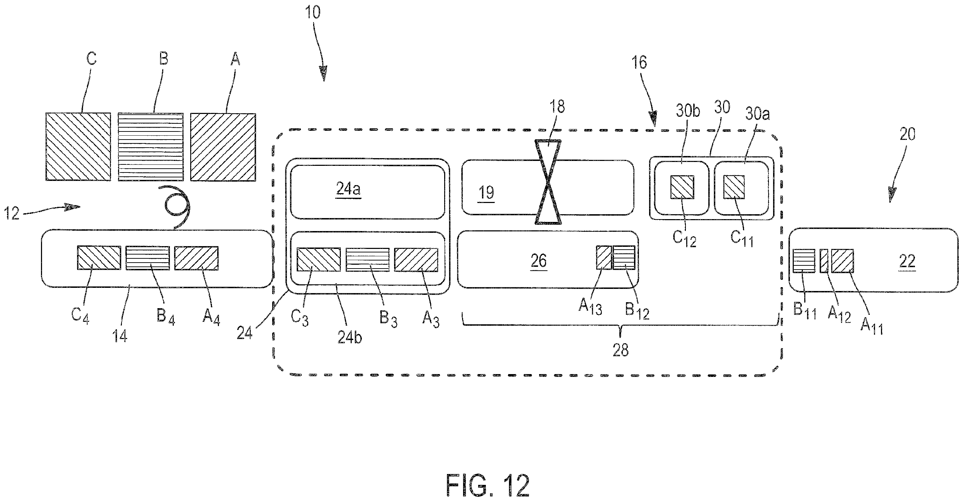

Referring again to FIG. 11 and further referring to FIG. 12, at cutting station 16, blade 18 cuts bale C₁ into pieces C₁₁, C₁₂. Conveyor belt 19 transports these pieces to transport shuttle 30. Delivery belt 30b receives pieces C₁₁, C₁₂ and conveys piece C₁₁ to delivery belt 30a. Transport shuttle 30 aligns belt 30a with conveyor belt 22 to deliver piece C₁₁ to weighing station 20. Transport shuttle 30 at the same time aligns belt 30b and transfer belt 26. Belt 30b stores piece C₁₂ with pieces A₁₃, B₁₂ until creation of the next batch.

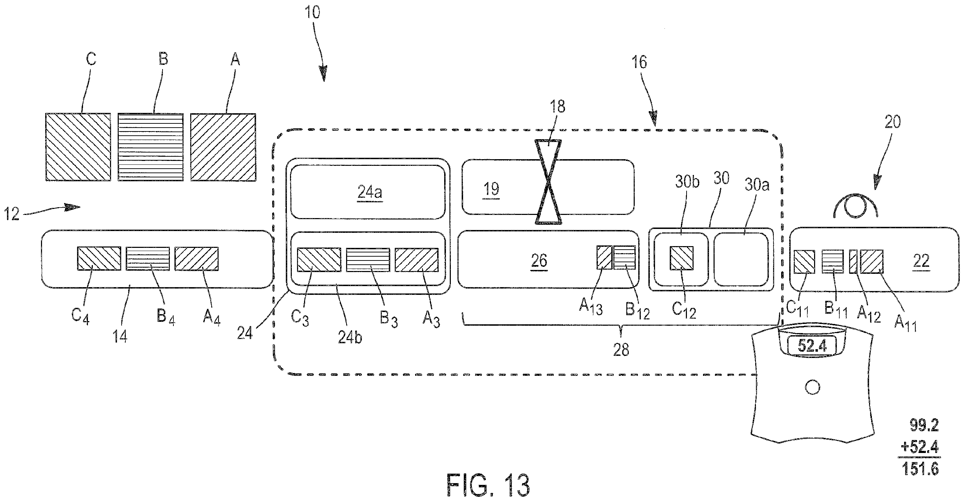

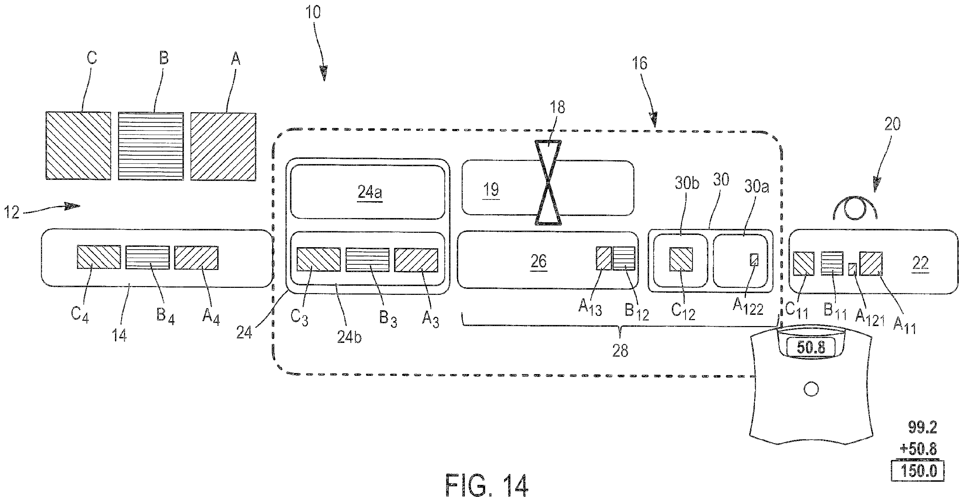

Referring further to FIGS. 13 and 14, weighing station 20 detects the cumulative weight of pieces A₁₁, A₁₂, B₁₁ and C₁₁ at about 52.4 kg. Thus, the sum of the detected weight of the bales A₂, B₂, C₂ and a detected weight of the bale pieces A₁₁, A₁₂, B₁₁ and C₁₁ is obtained and compared with the required batch weight (i.e., 150 kg). In this example, the sum of the detected weights is about 151.6 kg, which is greater than the required weight of the batch.

At weighing station 20 or at the control station, excess weight is eliminated by cutting a small piece from one of the pieces A₁₁, A₁₂, B₁₁, C₁₁. Thus, piece A₁₂ is divided into two pieces A₁₂₁, A₁₂₂, in which the piece A₁₂₂ is cut precisely to weigh about 1.6 kg. The cut of piece A₁₂₂ is done manually or automatically. Piece A₁₂₂ is transferred to belt 30a to be stored until a subsequent batch creation cycle. The sum of the detected weights then becomes 150 kg, which is equal to the required weight of the batch. The pieces A₁₁, A₁₂, A₁₂₁, B₁₁, C₁₁ are assembled with the bales A₂, B₂, C₂, ensuring both a correct batch weight and an appropriate weight proportion of each rubber type before entering the mixer.

Although weighing is shown to be carried out at weighing station 20, cutting bales of one rubber type can take place at the same time as weighing bales or pieces of another rubber type. It is also contemplated that the weighing steps may be performed during the cycle before weighing station 20. For example, a scale can detect the weight of bales before cutting them. Another scale can detect the weight of the pieces after cutting and before transporting the pieces to weighing station 20.

A blade cycle can be effected by PLC control and may include pre-programmed cutting information (e.g., a nominal cut thickness to achieve a required weight, a total number of cuts required when presented with a certain number of natures, or a residence time before the next cut). To perform an automatic cut, several sensors can detect not only the presence or absence of one of the bales A, B, C, but also the precise positioning of each bale before passing under blade 18.

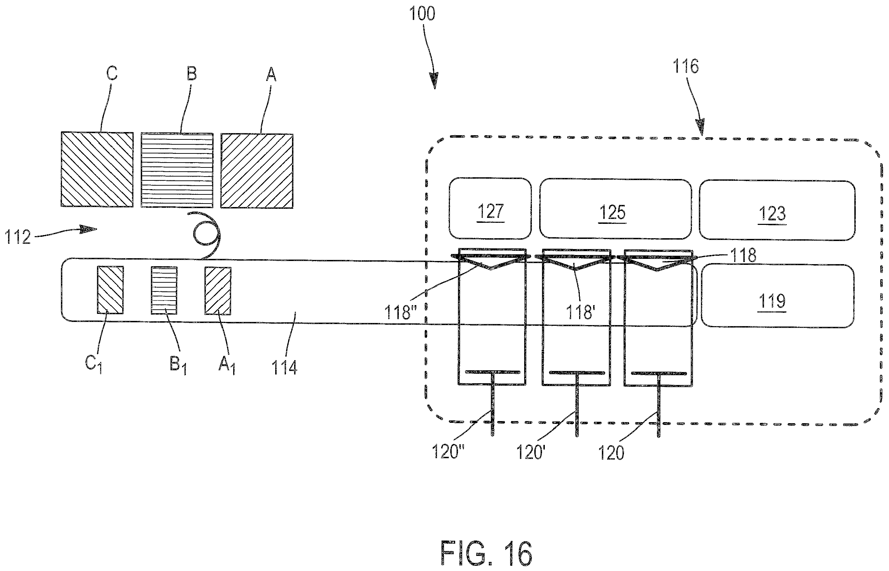

FIGS. 16 to 19 show another embodiment of the invention for creating batches of rubber to be mixed. As shown in FIG. 16, a system 100 includes a supply station 112 where rubber bales A_{I}, B_{I}, C_{I} (where "I" varies from 1 to N) are selected from rubber species A, B, C and are placed on a feed belt 114. Supply station 112 may include a slot for receiving and storing the bales before creating a batch. As described with reference to FIGS. 1 to 15, batches are created by mixing different types and grades of elastomers. For example, as described with reference to FIGS. 1-15, to create a batch during a batch creation cycle, any number of bales of natural rubber and synthetic rubber may be selected in a batch creation cycle. The rubber bales A_{I}, B_{I}, C_{I} may be different from the rubber bales A, B, C selected with reference to system 10. Rubber bales A_{I}, B_{I}, C_{I} include bales that are pre-packaged at specific weights.

Referring again to FIG. 16, feed belt 114 feeds a cutting station 116 having at least three cutting subassemblies 118, 118' and 118". Each subassembly cuts at least one bale into pieces of predetermined weight, and each subassembly may include one or more blades that are disposed on a known machine for cutting the bale-shaped rubber. It is understood that any number of pieces A_{IJ}, B_{IJ}, C_{IJ} (where "J "varies from 1 to N) are cut in order to create a batch with the required weight. Each subassembly 118, 118', 118" is coupled with a respective linear actuator 120, 120', 120" that adjusts the position of a bale according to the needs of the rubber mixture recipe. Each linear actuator operates as known (for example, pneumatically or hydraulically).

System 100 also has a transport system that transfers the rubber bales and pieces. In this transport system, feed belt 114 feeds rubber to cutting subassemblies 118, 118', 118", and at least one conveyor belt 119 conveys rubber bales and pieces for feeding at least one mixer (not shown ) for creation of the batch. Conveyor belt 119 includes at least one scale as is known in the art. The transport system also includes conveyor belts 123, 125 and 127 that convey the rubber pieces from cutting subassemblies 118, 118', 118" to feed the mixer. Each conveyor belt 125 and 127 includes at least one scale similar to that provided with conveyor belt 119. A control belt (not shown) can be disposed downstream of each conveyor belt 119 and 123. The control belt not only verifies the batch weight (which includes bales and pieces of bales) before delivery to the rubber mixer, but also allows storage of the pieces until a full batch is created. Although only one conveyor belt 119, 123, 125 or 127 is shown, several conveyor belts may be used in accordance with the number and types of batches being created.

Reference is now made to figures 16 to 19 for describing a dosing process that is performed by system 100. All figures are provided by way of example only and do not limit the invention to particular values.

In FIG. 16, a dosing process begins. A batch is selected that requires the mixing of three different types of rubber. For example, the selected batch has a required weight of 150 kg, although it is understood that the required weight can be any weight.

At supply station 112, three bales A₁, B₁, C₁ are chosen from the corresponding rubber natures A, B, C. Each bale A₁, B₁, C₁ has a predetermined weight close to 30 kg. Bales A₁, B₁, C₁ are supplied to feed belt 114 by an operator (as shown) or automatically. The bales can be supplied in any order (ABC, ACB, BAC, BCA, CAB, CBA) in correspondence with the selected batch.

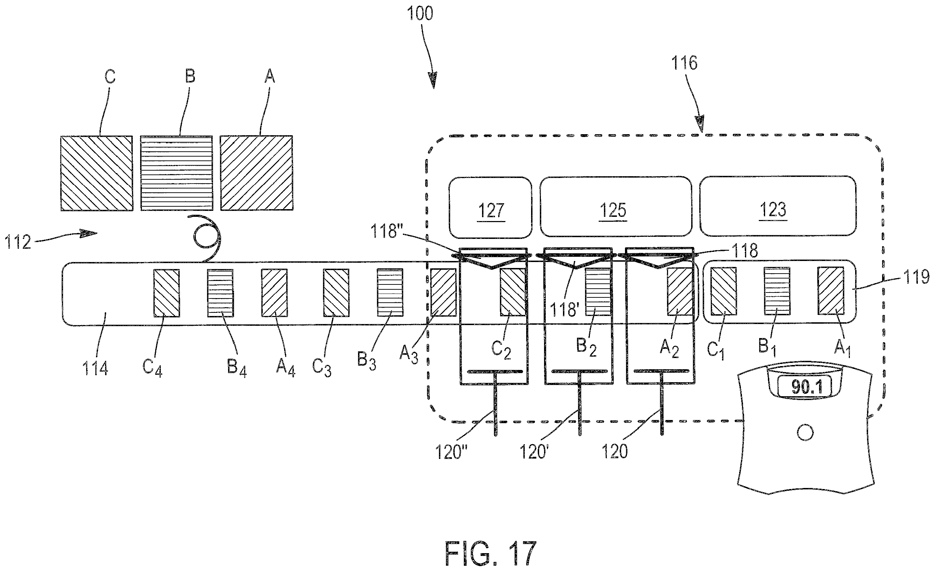

Referring further to FIGS. 17-19, feed belt 114 carries bales A₁, B₁, C₁ to conveyor belt 119 at the same time that feed belt 114 is loaded with a second set of bales A₂, B₂ C₂, a third set of bales A₃, B₃, C₃ and a fourth set of bales A₄, B₄, C₄. Conveyor belt 119 easily receives bales A₁, B₁, C₁ and detects the cumulative weight of bales A₁, B₁, C₁. System 100 compares a detected weight of the bales with the required weight of the batch (i.e., 150 kg). Since the cumulative weight of the bales is about 90.1 kg, which is less than the required weight of the batch, the difference (about 60 kg) must be obtained in the same proportion. After weighing, conveyor belt 119 conveys bales A₁, B₁, C₁ directly to the mixer or to an area where the bales are stored until the desired batch weight is obtained.

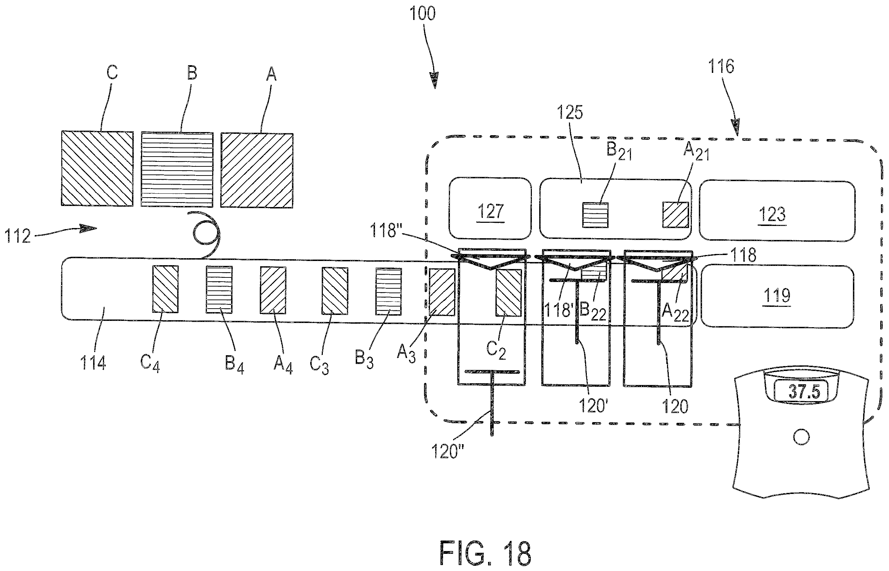

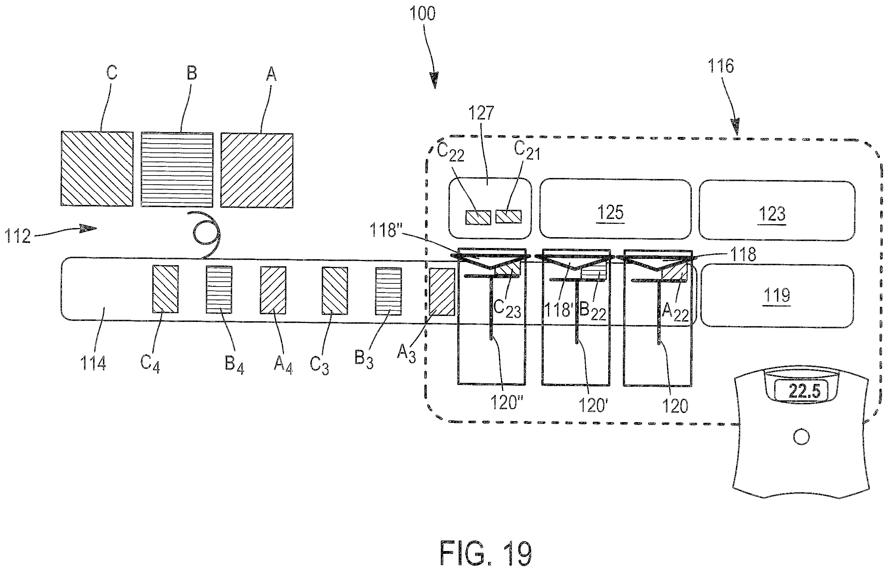

In order to obtain the difference, during the transfer of bales A₁, B₁, C₁ to conveyor belt 119, feed belt 114 transfers bales A₂, B₂, C₂ to respective cutting subassemblies 118, 118' and 118" in order to feed the blades (thus, bale A₂ is aligned with cutting subassembly 118, bale B₂ is aligned with cutting subassembly 118' and bale C₂ is aligned with cutting subassembly 118"). Referring again to FIG. 17 and further referring to FIGS. 18 and 19, bale A₂ will advance towards subassembly 118 that will successively cut one or more pieces A A₂₁, A₂₂. Bale B₂ will advance towards subassembly 118' that will successively cut one or more pieces B₂₁, B₂₂. Bale C₂ will advance towards subassembly 118" that will successively cut one or more pieces C₂₁, C₂₂, C₂₃. The number of pieces depends on the difference in weight between the detected weight of bales A₁, B₁, C₁ and the required weight of the batch.

Referring again to FIG. 18 and further referring to FIG. 19, linear actuator 120 loads transport belt 125 with piece A₂₁ and linear actuator 120' loads transport belt 125 with piece B₂₁. Transport belt 125 easily receives pieces A₂₁, B₂₁ and detects the cumulative weight of the pieces (about 37.5 kg). The system 100 may include a comparator that receives the sum of the detected weight of bales A₁, B₁, C₁ and a detected weight of pieces A₂₁ et B₂₁. This sum (127.6 kg) is then compared with the required weight of the batch (i.e., 150 kg). If the required weight of the batch exceeds this sum, the difference is obtained with the bale C₁. After weighing, transport belt 125 conveys the pieces directly to belt 123 for transfer to the rubber mixer or for storage until the desired weight of the batch is obtained.

Referring again to FIG. 19, at cutting station 116, subassembly 118" cuts bale C₂ into pieces C₂₁, C₂₂, C₂₃. Linear actuator 120" loads conveyor belt 127 with pieces C₂₁, C₂₂. The conveyor belt easily receives pieces C₂₁, C₂₂ and detects the cumulative weight of the pieces (about 22.5 kg). System 100 detects the cumulative weight of pieces A₂₁, B₂₁, C₂₁ and C₂₂ at about 150.1 kg. Thus, the sum of the detected weight of bales A₁, B₁, C₁ and a detected weight of pieces A₂₁, B₂₁, C₂₁ and C₂₂ is obtained and compared with the required weight of the batch (i.e., 150 kg). In this example, the sum of the detected weights is approximately 150.1 kg, which is greater than the required weight of the batch.

At cutting station 116, the excess weight is eliminated by cutting a small piece of one of the pieces C₂₁, C₂₂ (i.e., a piece C₂₁ or C₂₂ is cut precisely to weigh about 0.1 kg). The cutting of the piece is done manually or automatically and the pieces C₂₁, C₂₂ are transferred to the belts 127, 125 and 123 for delivery to the mixer with bales A₁, B₁, C₁ and pieces A₂₁, B₂₁. Pieces A₂₂, B₂₂, C₂₃ are stored to ensure, during the next cycle, both a correct batch weight and an appropriate weight proportion of each rubber type prior to entry into the mixer.

A cycle of the cutting subassembly may be performed by PLC control and may include pre-programming of the cutting information (e.g., a nominal cut thickness to achieve a required weight, a total number of cuts required when presented with a certain number of natures, or a residence time before the next cut). In order to perform an automatic cut, several sensors can detect not only the presence or absence of one of the bales A, B, C, but also the precise positioning of each bale before passing under the cutting subassemblies.

For all embodiments, a system could be set up to ensure the reproducibility of the location and position of each bale and/or each piece. Verification can be done by a known means, including "vision detection" that can be manual or automated (for example, with one or more cameras in communication with a PLC). An example is a camera system configured to create an image of the pieces and slices as explained in Japanese Patent JP6-190783. The system can be configured to determine an optimized cutting solution. The PLC is configured to control the cutting of the bale relative to the optimized cutting solution, in pieces of required weight and within the prescribed tolerance. The accuracy of the cutting and weighing during each batch creation cycle is thus respected.

The invention provides dosage efficiency without degrading the final properties of the mixed batch. The result is the increase in productivity without a proportionate increase in budgetary costs and cycle times. These short cycle times are achieved with minimal manual intervention, thus providing the required accuracy.

At least some of the various described techniques can be implemented in connection with hardware or software or, if warranted, with a combination of both. For example, an electrical data processing functionality may be used to implement any aspect of computing and power adjustment, including implementation in relation to a computing device (including a mobile networking device) that includes hardware, software or, if warranted, a combination of both. A server may be further configured to facilitate communication between at least one module as described and one or more of the computing devices.

While particular embodiments of the disclosed apparatus have been illustrated and described, it will be understood that various changes, additions and modifications may be made without departing from the scope of the present disclosure. Accordingly, no limitation should be imposed on the scope of the invention described with the exception of those set forth in the appended claims.

## Claims

1. A process for creating batches of unvulcanized rubber before mixing in a rubber mixer, including selecting at least one batch for mixing in the mixer, wherein each batch corresponds to a selection of rubber bales (A_{I}, B_{I}, C_{I}) that each correspond to a nature of rubber composition (A, B, C) having predetermined characteristics, the method comprising the following steps:
providing a supply station (12) where uncured rubber bales (A_{I}, B_{I}, C_{I}) are supplied from the corresponding rubber natures (A, B, C);
selecting unvulcanized rubber bales (A_{I}, B_{I}, C_{I}) from the rubber natures (A, B, C) and in a predetermined proportion corresponding to a batch selected at the supply station (12), wherein each batch comprises rubber types and grades from different suppliers, rubbers of different types from the same supplier, or a combination of the two;
providing a cutting station (116) comprising at least three cutting subassemblies (118, 118', 118") for cutting at least one bale (A_{I}, B_{I}, C_{I}) into pieces (A_{IJ}, B_{IJ}. C_{IJ}) and each cutting subassembly (118, 118', 118") is coupled with a respective linear actuator (120, 120', 120") that adjusts the position of a bale (A_{I}, B_{I}, C_{I}) according to a recipe for the rubber mixture;
providing a transport system that feeds the cutting subassemblies (118, 118', 118") and that transfers the bales (A_{I}, B_{I}, C_{I}) and the pieces (A_{IJ}, B_{IJ}. C_{IJ}) of rubber toward at least one mixer;
weighing the bales (A_{I}, B_{I}, C_{I}) to obtain the weight of the bales (A_{I}, B_{I}, Ci);
comparing the weight of the bales (A_{I}, B_{I}, C_{I}) with the required weight of the batch; and
transporting the bales (A_{I}, B_{I}, C_{I}) and the pieces (A_{IJ}, B_{IJ}. C_{IJ}) between the supply station (112), via feed belt (14, 114) to the cutting station (116) and the mixer according to a sequence determined by the equivalence between the required weight of the batch and (a) the weight of the bales (A_{I}, B_{I}, C_{I}) or (b) a sum of the weight of the bales (A_{I}, B_{I}, C_{I}) and a weight of the pieces (A_{IJ}, B_{IJ}. C_{IJ}).

2. The process according to claim 1, wherein the sequence comprises:
when the weight of the bales (A_{I}, B_{I}, C_{I}) is equal to the required weight of the batch, transporting the bales (A_{I}, B_{I}, C_{I}) as a batch to the rubber mixer;
when the weight of the bales (A_{I}, B_{I}, C_{I}) is greater than the required weight of the batch, removing a portion of at least one bale (A_{I}, B_{I}, C_{I}), with the removed portion having a weight equal to the difference between the required weight of the batch and the weight of the bales (A_{I}, B_{I}, C_{I}) ; and
when the weight of the bales (A_{I}, B_{I}, C_{I}) is less than the required weight of the batch, at the cutting station (16), cutting at least one additional bale (A_{I}, B_{I}, C_{I}) in one or more pieces (A_{IJ}, B_{IJ}. C_{IJ}) in a proportion corresponding to the predetermined proportion.

3. The process according to claim 2, wherein the transport system comprises:
a feed belt (114) for feeding the cutting subassemblies (118, 118', 118"); and
one or more transport belts (119, 123, 125, 127) that transport the bales (A_{I}, B_{I}, C_{I}) and the pieces (A_{IJ}, B_{IJ}. C_{IJ}) for feeding the mixer for the creation of the batch, and the transport belts (119, 125, 127) including at least one scale.

4. The process according to claim 3, further comprising:
weighing the pieces (A_{IJ}, B_{IJ}, C_{IJ}) to obtain the sum of the weight of the bales (A_{I}, B_{I}, C_{I}) and the weight of the pieces (A_{IJ}, B_{IJ}, C_{IJ}).

5. The process according to claim 4, wherein the sequence comprises:
when the sum exceeds the required weight of the batch, removing an excess part of at least one transported piece (A_{IJ}, B_{IJ}, C_{IJ}) having a weight equal to the difference between the required weight of the batch and the sum;
when the sum is less than the required weight of the batch, at the cutting station (116), cutting at least one additional bale (A_{I}, B_{I}, C_{I}) into one or more additional pieces(A_{IJ}, B_{IJ}, C_{IJ}) in a proportion corresponding to the predetermined proportion, with the at least one additional piece (A_{IJ}, B_{IJ}, C_{IJ}) having a weight equal to or greater than the difference between the required weight of the batch and the sum; and
when the sum is equal to the required weight of the batch, transport the pieces and the additional pieces (A_{IJ}, B_{IJ}, C_{IJ}) to the rubber mixer.

6. The process according to claim 5, wherein cutting and weighing are performed iteratively until the sum is equal to the required weight of the batch in a proportion corresponding to the predetermined proportion.

7. The process according to claim 5 or claim 6, further comprising:
storing the pieces (A_{IJ}, B_{IJ}, C_{IJ}) for the following batch creation cycle, during the course of which a cumulative weight of the stored pieces is compared to the required weight of the following batch.

8. The process according to one of the preceding claims, further comprising programming of the sequences for the transport system so that the predetermined sequence can be selected from among several sequences.

9. The process according to one of claims 1 to 8, further comprising mixing the batch in the rubber mixer.

## Patentansprüche

1. Verfahren zum Herstellen von Chargen von unvulkanisiertem Kautschuk vor Mischen in einem Kautschukmischer, umfassend Auswählen mindestens einer Charge zum Mischen in dem Mischer, wobei jede Charge einer Auswahl von Kautschukballen (A_{I}, B_{I}, C_{I}) entspricht, die jeweils einer Beschaffenheit einer Kautschukzusammensetzung (A, B, C) mit vorbestimmten Charakteristiken entsprechen, wobei das Verfahren die folgenden Schritte umfasst:
Bereitstellen einer Zuführstation (12), in der ungehärtete Kautschukballen (A_{I}, B_{I}, C_{I}) von den entsprechenden Kautschukbeschaffenheiten (A, B, C) zugeführt werden;
Auswählen unvulkanisierter Kautschukballen (A_{I}, B_{I}, C_{I}) aus den Kautschukbeschaffenheiten (A, B, C) und in einem vorbestimmten Verhältnis entsprechend einer an der Zuführstation (12) ausgewählten Charge, wobei jede Charge Kautschukarten und -sorten von unterschiedlichen Zulieferern, Kautschuke unterschiedlicher Arten von demselben Zulieferer oder eine Kombination aus beidem umfasst;
Bereitstellen einer Schneidstation (116), die mindestens drei Schneidunterbaugruppen (118, 118', 118") zum Schneiden mindestens eines Ballens (A_{I}, B_{I}, C_{I}) in Stücke (A_{IJ}, B_{IJ}, C_{IJ}) umfasst, und wobei jede Schneidunterbaugruppe (118, 118', 118") mit einem jeweiligen Linearaktor (120, 120', 120") gekoppelt ist, der die Position eines Ballens (A_{I}, B_{I}, C_{I}) gemäß einem Rezept für die Kautschukmischung einstellt;
Bereitstellen eines Transportsystems, das die Schneidunterbaugruppen (118, 118', 118") beschickt und das die Ballen (A_{I}, B_{I}, C_{I}) und die Kautschukstücke (A_{IJ}, B_{IJ}, C_{IJ}) zu mindestens einem Mischer transferiert;
Wiegen der Ballen (A_{I}, B_{I}, C_{I}), um das Gewicht der Ballen (A_{I}, B_{I}, C_{I}) zu erhalten;
Vergleichen des Gewichts der Ballen (A_{I}, B_{I}, C_{I}) mit dem erforderlichen Gewicht der Charge; und
Transportieren der Ballen (A_{I}, B_{I}, C_{I}) und der Stücke (A_{IJ}, B_{IJ}, C_{IJ}) zwischen der Zuführstation (112), über ein Beschickungsband (14, 114) zu der Schneidstation (116) und dem Mischer gemäß einer Abfolge, die durch die Entsprechung zwischen dem erforderlichen Gewicht der Charge und (a) dem Gewicht der Ballen (A_{I}, B_{I}, C_{I}) oder (b) einer Summe aus dem Gewicht der Ballen (A_{I}, B_{I}, C_{I}) und einem Gewicht der Stücke (A_{IJ}, B_{IJ}, C_{IJ}) bestimmt wird.

2. Verfahren nach Anspruch 1, wobei die Abfolge umfasst:
wenn das Gewicht der Ballen (A_{I}, B_{I}, C_{I}) gleich dem erforderlichen Gewicht der Charge ist, Transportieren der Ballen (A_{I}, B_{I}, C_{I}) als eine Charge zu dem Kautschukmischer;
wenn das Gewicht der Ballen (A_{I}, B_{I}, C_{I}) größer als das erforderliche Gewicht der Charge ist, Entfernen eines Teils von zumindest einem Ballen (A_{I}, B_{I}, C_{I}), wobei der entfernte Teil ein Gewicht aufweist, das gleich der Differenz zwischen dem erforderlichen Gewicht der Charge und dem Gewicht der Ballen (A_{I}, B_{I}, C_{I}) ist; und
wenn das Gewicht der Ballen (A_{I}, B_{I}, C_{I}) kleiner als das erforderliche Gewicht der Charge ist, Schneiden mindestens eines zusätzlichen Ballens (A_{I}, B_{I}, C_{I}) an der Schneidstation (16) in ein oder mehrere Stücke (A_{IJ}, B_{IJ}, C_{IJ}) in einem Verhältnis, das dem vorbestimmten Verhältnis entspricht.

3. Verfahren nach Anspruch 2, wobei das Transportsystem umfasst:
ein Beschickungsband (114) zum Beschicken der Schneidunterbaugruppen (118, 118', 118"); und
ein oder mehrere Transportbänder (119, 123, 125, 127), die die Ballen (A_{I}, B_{I}, C_{I}) und die Stücke (A_{IJ}, B_{IJ}, C_{IJ}) zum Beschicken des Mischers zur Herstellung der Charge transportieren, und wobei die Transportbänder (119, 125, 127) mindestens eine Waage umfassen.

4. Verfahren nach Anspruch 3, das ferner umfasst:
Wiegen der Stücke (A_{IJ}, B_{IJ}, C_{IJ}), um die Summe des Gewichts der Ballen (A_{I}, B_{I}, C_{I}) und des Gewichts der Stücke (A_{IJ}, B_{IJ}, C_{IJ}) zu erhalten.

5. Verfahren nach Anspruch 4, wobei die Abfolge umfasst:
wenn die Summe das erforderliche Gewicht der Charge übersteigt, Entfernen eines überschüssigen Teils von mindestens einem transportierten Stück (A_{IJ}, B_{IJ}, C_{IJ}), der ein Gewicht aufweist, das gleich der Differenz zwischen dem erforderlichen Gewicht der Charge und der Summe ist;
wenn die Summe kleiner als das erforderliche Gewicht der Charge ist, Schneiden mindestens eines zusätzlichen Ballens (A_{I}, B_{I}, C_{I}) an der Schneidstation (116) in ein oder mehrere zusätzliche Stücke (A_{IJ}, B_{IJ}, C_{IJ}) in einem Verhältnis, das dem vorbestimmten Verhältnis entspricht, wobei das mindestens eine zusätzliche Stück (A_{IJ}, B_{IJ}, C_{IJ}) ein Gewicht aufweist, das gleich oder größer als die Differenz zwischen dem erforderlichen Gewicht der Charge und der Summe ist; und
wenn die Summe gleich dem erforderlichen Gewicht der Charge ist, Transportieren der Stücke und der zusätzlichen Stücke (A_{IJ}, B_{IJ}, C_{IJ}) zu dem Kautschukmischer.

6. Verfahren nach Anspruch 5, wobei das Schneiden und Wiegen iterativ durchgeführt werden, bis die Summe gleich dem erforderlichen Gewicht der Charge in einem Verhältnis ist, das dem vorbestimmten Verhältnis entspricht.

7. Verfahren nach Anspruch 5 oder Anspruch 6, das ferner umfasst:
Lagern der Stücke (A_{IJ}, B_{IJ}, C_{IJ}) für den nächsten Chargenherstellungszyklus, wobei während des Verlaufs desselben ein kumulatives Gewicht der gelagerten Stücke mit dem erforderlichen Gewicht der nächsten Charge verglichen wird.

8. Verfahren nach einem der vorhergehenden Ansprüche, ferner umfassend Programmieren der Abfolgen für das Transportsystem, so dass die vorbestimmte Abfolge aus mehreren Abfolgen ausgewählt werden kann.

9. Verfahren nach einem der Ansprüche 1 bis 8, ferner umfassend Mischen der Charge in dem Kautschukmischer.

## Revendications

1. Procédé pour créer des batchs de caoutchouc non-vulcanisé avant leur mélangeage dans un mélangeur de caoutchouc, y compris une sélection d'au moins un batch pour le mélange dans le mélangeur, dans lequel chaque batch correspond à une sélection des balles de caoutchouc (A_{I}, B_{I}, C_{I}) qui correspondent chacune à une nature de caoutchouc (A, B, C) ayant des caractéristiques prédéfinies, comprenant les étapes suivantes :
fournir une station d'approvisionnement (112) où des balles de caoutchouc (A_{I}, B_{I}, C_{I}) non-vulcanisé sont fournies à partir des natures de caoutchouc correspondantes;
choisir des balles de caoutchouc (A_{I}, B_{I}, C_{I}) non-vulcanisé dans des natures et une proportion prédéterminée qui correspond à un batch sélectionné à la station d'approvisionnement (112) de balles, dans lequel chaque batch comprend des caoutchoucs de sortes et de grades de fournisseurs différents, des caoutchoucs de lots différents du même fournisseur, ou une combinaison des deux ;
fournir une station de coupe (116) qui comprend au moins trois sous-ensembles de coupe (118, 118', 118") pour couper au moins une balle (A_{I}, B_{I}, C_{I}) en morceaux (A_{IJ}, B_{IJ}, C_{IJ}) et chaque sous-ensemble de coupe (118, 118', 118") est couplée avec un actionneur linéaire respectif (120, 120', 120") qui ajuste la position d'une balle (A_{I}, B_{I}, C_{I}) selon d'une recette du mélange de caoutchouc ;
fournir un système de transport qui alimente les sous-ensembles de coupe (118, 118', 118") et qui transfère les balles (A_{I}, B_{I}, C_{I}) et les morceaux de caoutchouc (A_{IJ}, B_{IJ}. C_{IJ}) vers au moins un mélangeur;
peser les balles (A_{I}, B_{I}, C_{I}) pour obtenir le poids des balles (A_{I}, B_{I}, C_{I}) ;
comparer le poids des balles (A_{I}, B_{I}, C_{I}) avec le poids requis du batch; et
transporter les balles (A_{I}, B_{I}, C_{I}) et les morceaux (A_{IJ}, B_{IJ}, C_{IJ}) entre la station d'approvisionnement (112), la station de coupe (116) et le mélangeur selon une séquence déterminée par l'équivalence entre le poids requis du batch et (a) le poids des balles (A_{IJ}, B_{IJ}, C_{IJ}) ou (b) une somme du poids des balles (A_{IJ}, B_{IJ}, C_{IJ}) et un poids des morceaux (A_{IJ}, B_{IJ}, C_{IJ}).

2. Procédé selon la revendication 1, dans lequel la séquence comprend:
lorsque le poids des balles (A_{I}, B_{I}, C_{I}) est égal au poids requis du batch, transporter les balles (A_{I}, B_{I}, C_{I}) en tant que batch dans le mélangeur de caoutchouc;
lorsque le poids des balles (A_{I}, B_{I}, C_{I}) est supérieur au poids requis du batch, enlever une partie d'au moins une balle (A_{I}, B_{I}, C_{I}), la partie enlevée ayant un poids égal à la différence entre le poids requis du batch et le poids des balles (A_{I}, B_{I}, C_{I}) ; et
lorsque le poids des balles (A_{I}, B_{I}, C_{I}) est inférieur au poids requis du batch, à la station de coupe (116), couper au moins une balle supplémentaire (A_{I}, B_{I}, C_{I}) dans un ou plusieurs morceaux (A_{IJ}, B_{IJ}, C_{IJ}) dans une proportion correspondant à la proportion prédéterminée.

3. Procédé selon la revendication 2, dans lequel le système de transport comprend:
un tapis d'alimentation (114) pour alimenter les sous-ensembles de coupe (118, 118', 118") ; et
des tapis de transport (119, 123, 125, 127) qui transportent des balles (A_{I}, B_{I}, C_{I}) et des morceaux (A_{IJ}, B_{IJ}, C_{IJ}) pour alimenter le mélangeur pour la création du batch, et les tapis de transport (119, 125, 127) comprennent au moins une bascule.

4. Procédé selon la revendication 3, comprenant en outre :
peser des morceaux (A_{IJ}, B_{IJ}, C_{IJ}) pour obtenir la somme du poids des balles (A_{I}, B_{I}, C_{I}) et du poids des morceaux (A_{IJ}, B_{IJ}, C_{IJ}).

5. Procédé selon la revendication 4, dans lequel la séquence comprend:
lorsque la somme dépasse le poids requis du batch, enlever une partie en excès d'au moins un morceau (A_{IJ}, B_{IJ}, C_{IJ}) ayant un poids égal à la différence entre le poids requis du batch et la somme;
lorsque la somme est inférieure au poids requis du batch, à la station de coupe (116), couper au moins une balle supplémentaire (A_{I}, B_{I}, C_{I}) dans un ou plusieurs morceaux supplémentaires dans une proportion correspondant à la proportion prédéterminée, avec au moins un morceau supplémentaire (Au, Bu, C_{IJ}) ayant un poids égal ou supérieur à la différence entre le poids requis du batch et la somme; et
lorsque la somme est égale au poids requis du batch, transporter les morceaux et les morceaux supplémentaires (Au, Bu, Cu) au mélangeur de caoutchouc.

6. Procédé selon la revendication 5, dans lequel couper et peser sont réalisés de façon itérative jusqu'à ce que la somme soit égale au poids requis du batch dans une proportion correspondante à la proportion prédéterminée.

7. Procédé selon la revendication 5 ou la revendication 6, comprenant en outre :
stocker des morceaux (A_{IJ}, B_{IJ}, C_{IJ}) pour le cycle suivant de création de batchs, au cours duquel un poids cumulatif des morceaux stockés est comparé au poids requis du batch suivant.

8. Procédé selon l'une quelconque des revendications précédentes, comprenant en outre la programmation des séquences pour le système de transport de telle sorte que la séquence prédéterminée peut être sélectionnée parmi plusieurs séquences.

9. Procédé selon l'une quelconque des revendications 1 à 8, comprenant en outre le mélangeage du batch dans le mélangeur de caoutchouc.
